# EUROPEAN PATENT SPECIFICATION

(11) **EP 3 359 311 B1**
(45) Date of publication and mention of the grant of the patent: **18.03.2020**
(21) Application number: 16798555.5
(22) Date of filing: 06.10.2016
(51) Int. Cl.: B08B 3/02, G01K 13/02

(54) **HOT WATER CLEANER AND METHOD WITH TEMPERATURE CONTROL**
WARMWASSERSPENDER UND VERFAHREN MIT TEMPERATURREGELUNG
APPAREIL DE NETTOYAGE À EAU CHAUDE ET PROCÉDÉ AVEC RÉGULATION DE TEMPÉRATURE

(30) Priority: 09.10.2015 IT UB20154286
(43) Date of publication of application: 15.08.2018
(73) Proprietor: IP CLEANING S.R.L., 30026 Portogruaro (VE) (IT)
(72) Inventor: VERNAZZA, Giulio, 43012 Fontanellato (PR) (IT)
(74) Representative: Celestino, Marco
(86) International application number: PCT/IB2016/055994
(87) International publication number: WO 2017/060852

(56) References cited:
- EP-A1- 0 591 660
- WO-A1-00/45967
- WO-A1-01/71294
- DE-A1-102006 042 958
- DE-U1-202007 004 440
- FR-A- 1 000 187
- US-A- 5 607 349
- US-B1- 8 857 736

## Description

### Field of the invention

The present invention relates to the field of the water cleaners, i.e. machines which supply a jet of hot water and high pressure for the removal of different types of material, in particular dirty and scaling, from solid surfaces.

The invention also relates to a method for adjusting the temperature of the water supplied by a water cleaner.

### Background of the invention

As well known, the hand-actuated water cleaners are equipped with a jet lance, or gun, through which a high pressure cleaning liquid jet is supplied, generally water, or a mix of water and detergent, and, in case, a descaling agent for preserving the parts of the machine. The high pressure jet is produced by a pump unit that is hydraulically connected to a jet lance through a hydraulic circuit and that is able to provide, at the exit, a water flow at a pressure that can be higher than 300 bar.

More precisely, the pump unit, generally a piston pump operated by an electric motor, is connected at the delivery to the hydraulic circuit, which ends with the jet lance, and at the suction to a water source, for example the water supply. However, water cleaners are also known that are equipped with a self-priming pump.

The hydraulic circuit normally provides a first and a second pressure switches connected to a control unit. More in detail, the control unit combines the signals received from 2 pressure switches in order to monitoring the working status of the machine. In particular, the combination of the above described signals allows to verify how the machine works in the absence of feeding, the stand-by of the machine, if during the working there is a work stoppage, the stop of the boiler, if this has a pressure (equivalent flow rate) less than a minimum threshold value and any micro-leakage of the hydraulic circuit.

A particular type of water cleaners is the hot water cleaners. Thanks to the use high pressure and temperature water, the hot water cleaners allows to obtain, under the same pressure, a more effective cleaning action w.r.t. the water cleaners, which supply water at room temperature. According to the regulations in force at present, in the case of water cleaners with a maximum exit temperature of 110 °C, the highest pressure that can be used is 350 bar, as for those using cold water. If, instead, the maximum exit temperature raises to 155°C, the highest pressure that can be used cannot be higher than 32 bar.

In case of hot water cleaners, further to the above disclosed components, the hydraulic circuit is also provided with a boiler arranged to heat the high pressure water coming from the pump, up to a determined temperature. Also in this case, the high pressure and temperature water is delivered through a jet lance. The temperature at which the water is heated by means of boiler depends on the type of application to which the water cleaner is destined and is normally adjustable in such a way to have a machine with a certain versatility, i.e. that can be used for different purposes, e.g. car body washing, the washing of different surfaces, for example floors, hulls, etc.

Therefore, in these machines, the control unit adjusts also the temperature at which the water exits from the boiler. This is possible, because, these water cleaners are provided with a temperature sensor, which detects the water temperature and sends a corresponding signal of temperature to the control unit that consequently regulates the boiler turning it on, or off, i.e. opening, or closing, the valves that regulate the flow of fuel towards the boiler.

In the water cleaners of known type, the temperature sensor is positioned adjacent to the external wall of the boiler, and therefore, in this case, the sensor is not in contact with the water, or it is positioned directly into contact with the cleaning water.

In both the above described cases, the adjustment of the cleaning liquid temperature is not very precise.

In fact, in the first case, i.e. with the temperature sensor positioned adjacent to the external wall of the boiler, it is possible to prolong the average life of the sensor, but however, the temperature detection by the sensor is affected by a series of factors that compromise its accuracy. In particular, the temperature measurement is distorted by the presence of materials having different thermal conductivities. This causes, in fact, a temperature gradient, which distorts the measurement.

In the second case, instead, i.e. with the temperature sensor positioned, in operating conditions, in direct contact with the cleaning liquid, further to the thermal gradients generated for the use of different materials, generally different types of steels, or however for the use of materials having a low thermal conductivity, normally between 20 and 50-60 W/m·K, there are other aspects that compromise the temperature detection by the sensor. In particular, in this type of water cleaners, between the exit of the water from the boiler and the point where the temperature sensor is positioned, there are many changes of the liquid flow section. This causes turbulences in the water flowing through the circuit, that further distort the temperature detected by the sensor.

Examples of prior art water cleaners, which use a high pressure and temperature liquid, are described in EP0591660, WO00/45967 and US5607349.

In particular in EP0591660 a water cleaner is disclosed provided with a duct in which, in working conditions, a cleaning liquid at a determined pressure flows through. Furthermore, a boiler is provided fed with a determined fuel in order to cause the heating of the cleaning liquid. The apparatus is, furthermore, provided with a safety device in order to avoid that the temperature, or the pressure, of the cleaning liquid can exceed a determined threshold value.

As described in the document, the main purpose of that invention is to provide a safety device that is completely mechanical. In this regard, a temperature sensor is provided that is housed within a recess, which is orthogonal to said conduit. The temperature sensor has an internal section of a diameter less than the recess. Therefore, the cleaning liquid, which passes through the duct, floods the above disclosed recess, going in contact with the external wall of the temperature sensor body. Furthermore, coaxial to the sensor body, a piston is positioned that is able to slide axially to it. More in detail, when the cleaning liquid temperature exceeds a determined value, the piston starts to slide, opposed by a spring, and departing from the temperature sensor body, it moves in a position that causes the closure of the conduit, which feeds the fuel to the boiler. Therefore, the temperature of the cleaning liquid decreases.

In light of the above, the technical solution disclosed in EP0591660 does not allow to control the cleaning fluid temperature in a fast and precise way.

### Summary of the invention

It is, therefore, a purpose of the present invention to provide a water cleaner that is able to overcome the above disclosed drawbacks of the prior art.

It is, in particular, a purpose of the present invention to provide a water cleaner that allows to adjust, in a very precise manner, the temperature of the cleaning liquid, which is delivered through a delivery device e.g. a jet lance, or a gun, in such a way to guarantee to a user of using the most suited temperature for the application to which the machine is destined.

These and other objects are achieved by a water cleaner in accordance with claim 1, comprising:
- a pump unit arranged to feed a determined flow of a cleaning liquid at a predetermined pressure in a hydraulic circuit;
- a boiler arranged to transfer to said cleaning liquid a predetermined thermal power in order to cause its heating up to a predetermined temperature, said boiler being provided with an outlet section of said liquid having a predetermined diameter;
- a delivery device hydraulically connected to said outlet section of said boiler and arranged to deliver said flow of said cleaning liquid at said predetermined pressure and at said predetermined temperature;
wherein is provided, furthermore:
- an adjusting unit arranged to adjust said thermal power supplied by said boiler to said cleaning liquid, said adjusting unit comprising:
   - a temperature sensor, which is arranged to be dipped, in use, in said high pressure cleaning liquid in such a way to detect its temperature and to generate a corresponding signal of temperature (Ti);
   - a control unit operatively connected to said temperature sensor, said control unit comprising a microprocessor and being arranged to increase, or decrease, said thermal power supplied by said boiler to said cleaning liquid, depending on said signal of temperature (Ti) received by said temperature sensor;
- a measurement block provided with a housing arranged to house, in use, said temperature sensor, said measurement block being provided with an inlet mouth for the inlet of said cleaning liquid, and with an outlet mouth for the exit of said cleaning liquid, between the inlet mouth and the outlet mouth a passageway, which is hydraulically connected to said housing, being defined through which, in use, said cleaning liquid is arranged to flow;
   wherein said measurement block is configured in such a way that the temperature sensor is positioned, in use, at a distance from an outlet mouth of said outlet section of said boiler less than 20 mm, and in such a way that the section Φ of passageway where the cleaning liquid reaches said temperature sensor has a surface higher than 100 mm².

The particular technical solution provided by the present invention allows, on the one hand, to eliminate the thermal jumps of the prior art solutions, at the connection walls of parts made of different materials and on the other hand, to carry out a temperature detection in a point of the hydraulic circuit that is very close to the boiler. As a consequence, it is possible to carry out a highly accurate temperature detection by the temperature sensor housed inside the measurement block, immediately downstream of the boiler.

In particular, the measurement block can be made of a single metallic material having a thermal conductivity higher than, or equal to, 150 W/m·K, in such a way to have a quick heat transfer and, therefore, to obtain a very accurate detection of the temperature by the temperature sensor.

Advantageously, the material in which the measurement block is made of, has a thermal conductivity higher than 200 W/m·K, in such a way to achieve an even faster heat transfer and, therefore, further increasing the precision of the temperature detection by the temperature sensor.

Advantageously, the flow passage section of the liquid between the outlet mouth of the boiler, the inlet mouth and the outlet mouth of the measurement block and the housing within which the temperature sensor is housed, is substantially constant. This allows to avoid thermal jumps due to turbulences produced by narrowings, or however, by changes in the flow section of the liquid as in the water cleaners of known type.

Preferably, the metallic material is aluminium, advantageously aluminium of high quality, or an aluminium alloy. In particular, the aluminium is, at the same time, a high thermal conductivity, about 200-240 W/(m·K), and is very light and, therefore, it has ideal properties for creating an environment in which the temperature sensor can carry out the detection.

Advantageously, the outlet section of the boiler and the inlet section of the measurement block are engaged by means of quickly releasable lock and unlock members.

Preferably, the measurement block is a monobloc, i.e. it is made of one single piece. In particular, the measurement block can be produced by a metal forming process.

Preferably, the predetermined distance is less than 10 mm.

In a particular embodiment of the invention, the distance at which the temperature sensor is positioned from the outlet section of the boiler, is less than 6 mm, for example about 4-5 mm.

In particular, the control unit is arranged to adjust the flow of fuel, e.g. oil, that is fed to the boiler, on the basis of the signal of temperature t(i) received by the temperature sensor.

According to another aspect of the invention, in accordance with claim 15, a method for adjusting the temperature of the cleaning liquid delivered by a water cleaner comprises the steps of:
- pumping a flow of a cleaning liquid at a predetermined pressure into a hydraulic circuit of said water cleaner;
- heating, by means of a boiler, said cleaning liquid at said predetermined pressure up to reach a predetermined temperature, said boiler provided with an outlet section of said liquid having a flow section of predetermined diameter;
- detecting the temperature of the liquid flow exiting said boiler by means of a temperature sensor positioned downstream of said boiler, said temperature sensor being configured in such a way to provide a signal of temperature to a control unit, said temperature sensor being housed within a housing made in said measurement block produced in a single metallic material, and hydraulically connected to said outlet section of said boiler, said measurement block having an inlet mouth for the inlet of said cleaning liquid, and an outlet mouth for the exit of said cleaning liquid, and a passageway being defined between said inlet mouth and said outlet mouth through which, in use, said cleaning liquid flows, said temperature sensor being positioned, in use, at a distance from an outlet mouth of said outlet section of said boiler that is less than 20 mm, and arranged such that the section Φ of passageway where the cleaning liquid reaches said temperature sensor has a surface higher than 100 mm²;
- adjusting by said control unit, the thermal power produced by said boiler to heat said cleaning liquid at said predetermined pressure up to said predetermined temperature;
- delivering of said liquid at said predetermined pressure and at said predetermined temperature by means of a delivery device hydraulically connected to said measurement block.

### Brief description of the drawings

The invention will be illustrated in the following description of an exemplary embodiment thereof, exemplifying but not limitative, with reference to the attached drawings, in which:
- Figure 1 shows a scheme of a possible embodiment of a water cleaner equipped with a temperature measurement block, according to the invention;
- Figure 2 diagrammatically shows, in a longitudinal section view, a possible embodiment of a temperature measurement block for water cleaners, according to the invention;
- Figure 3 shows the measurement block of figure 2 in a side perspective view;
- Figure 4 shows an operation scheme in which the control unit, which processes the data detected by the temperature sensor, is shown, in order to adjust the operation of the boiler;
- Figure 5 shows in a block scheme, the main components of the water cleaner, according to the invention;
- Figures 6 shows in a block scheme, the main components of a first alternative embodiment of water cleaner of figure 5;
- Figures 7 and 8 show in perspective views a particular embodiment of the measurement block provided by the present invention, i.e. provided with quickly releasable lock and unlock members;
- Figures 9 shows in a block scheme the main components of another alternative embodiment of water cleaner of figure 5;
- Figure 10 shows in a longitudinal section view a possible embodiment of the safety block provided by the embodiment of figure 9;
- Figure 11 shows in a perspective view a possible embodiment of the safety block of figure 9;
- Figure 12 diagrammatically shows, in a perspective view, the main components of the hydraulic circuit when both the safety block and the measurement block are present.

### Description of some preferred exemplary embodiments

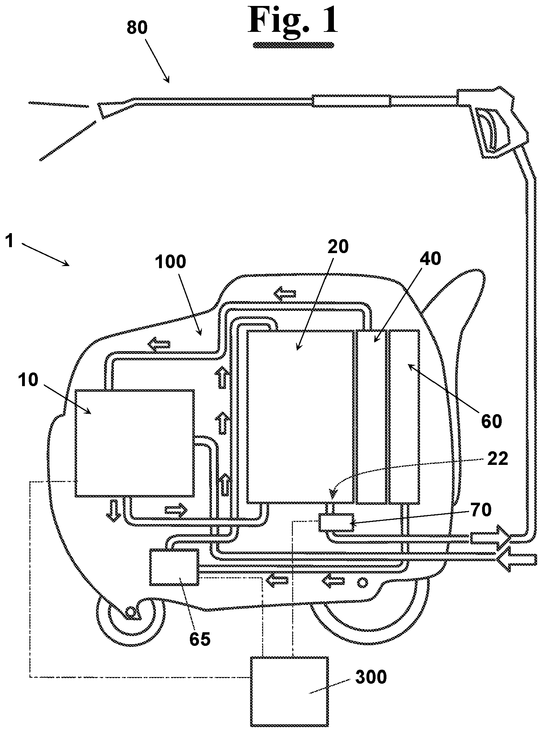

As diagrammatically shown in figure 1, a water cleaner 1, according to the present invention, comprises a pump unit 10 arranged to feed a flow of a cleaning liquid, for example water, at a predetermined high pressure, for example set between 25 and 32 bar, in a hydraulic circuit 100. This comprises a boiler 20 arranged to heat the high pressure cleaning liquid up to a predetermined temperature T.

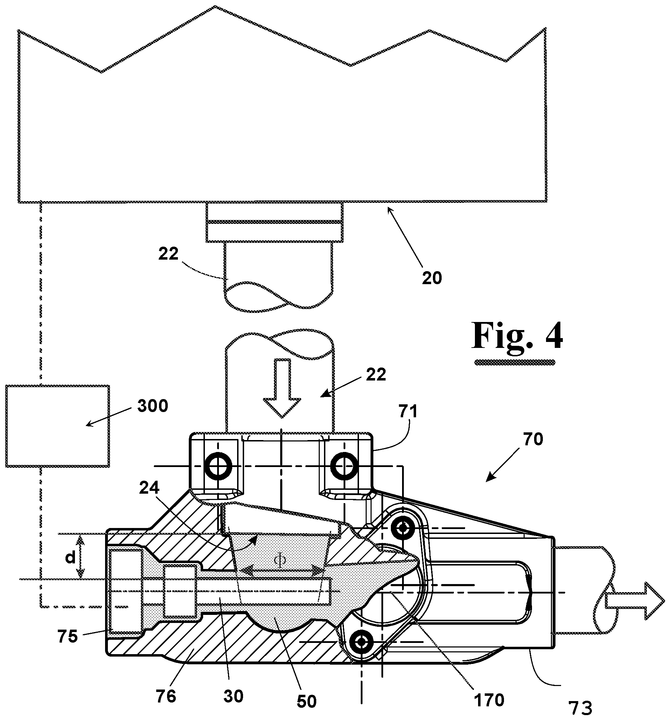

In particular, as diagrammatically shown in figure 4, boiler 20 is provided with an outlet section 22 for the liquid having a predetermined diameter d. The water cleaner 1 is, furthermore, equipped with a control unit 300, in particular provided with a microprocessor, arranged to adjust the thermal power that the boiler 20 has to transfer to the cleaning liquid at the above disclosed predetermined high pressure, in order to heat it up to the predetermined temperature.

In order to verify that the liquid exiting the boiler 20 is actually at the desired temperature T*, the hydraulic circuit 100 is provided with a temperature sensor 30. This is configured in such a way to send a signal of temperature T(i) to the control unit 300. In particular, the control unit 300 is electrically connected to the temperature sensor 30 and is arranged to increase, or decrease, the thermal power transferred by the boiler 20 to the cleaning liquid, on the basis of the signal of temperature Ti received by the temperature sensor 30.

The water cleaner 1 is, then, provided with a delivery device 80 hydraulically connected to the boiler 20 and arranged to deliver the cleaning liquid flow 50 at the predetermined pressure and temperature.

In the embodiment of figure 1, the water cleaner 1 is, furthermore, provided with a reservoir 40 containing a detergent and descaling agent. More precisely, pump unit 10 can be arranged to suck the detergent and descaling agent from reservoir 40 and to add it to the cleaning liquid, in particular water, before feeding the resulting mix in the boiler 20. Furthermore, a reservoir 60 is provided containing a determined amount of fuel for boiler 20. More precisely, the fuel is sucked by a second pump unit 65, which provides to feed it to boiler 20. Between boiler 20 and the delivery device 80, a measurement block 70 is provided, which has a housing 75 arranged to house, in use, the temperature sensor 30. The measurement block 70 is provided, furthermore, with a passageway 170, in which, in use, the cleaning liquid flows, and that is hydraulically connected to the housing 75. Therefore, in operating conditions, temperature sensor 30 is dipped in the liquid at high pressure and predetermined temperature T.

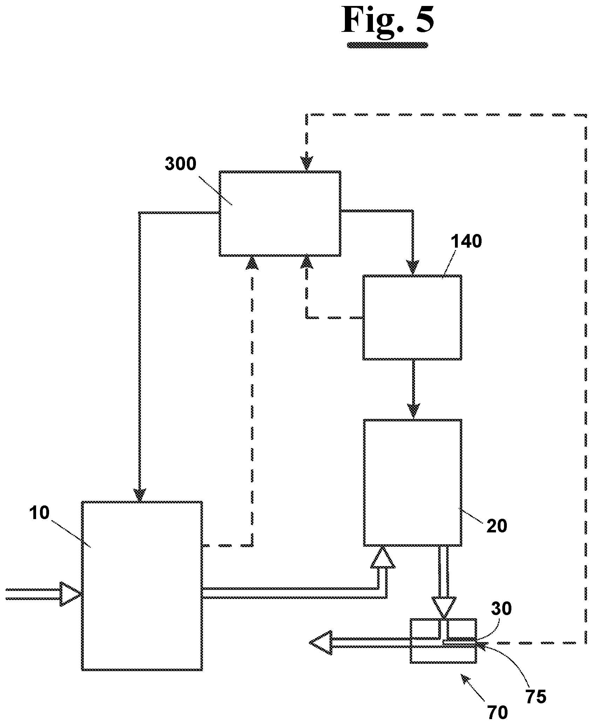

In an embodiment diagrammatically shown in the block schemes of figures 5, 6 and 9, the adjusting unit comprises a feeding device of fuel 140 arranged to feed a determined flow of fuel to the boiler 20. In this case, the control unit 300 is arranged to command the feeding device 140 in order to feed, or decrease, the flow of fuel fed to the boiler 20, depending on the temperature detected by the temperature sensor 30. In this case, therefore, the thermal power transferred from boiler 20 to the cleaning liquid is adjusted increasing, or decreasing, the fuel flow that is fed to the boiler 20.

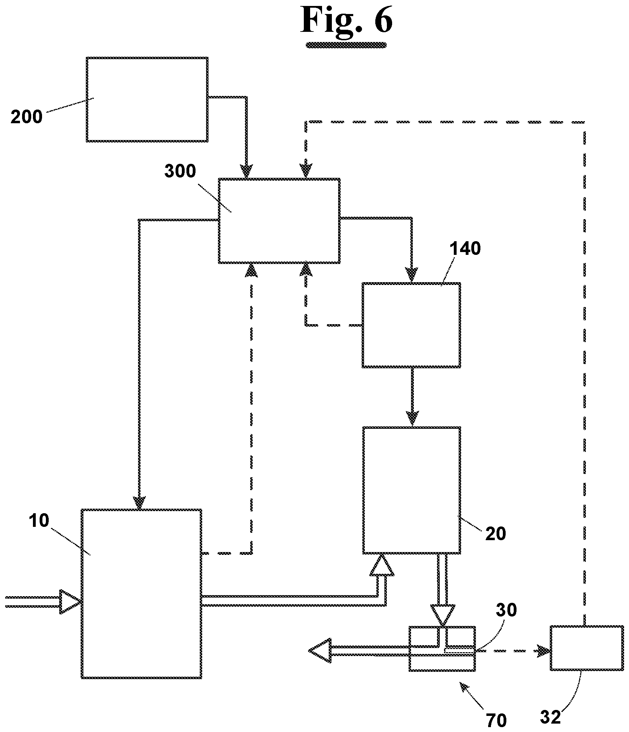

In the example shown in the block scheme of figure 6, the temperature sensor 30 is of electronic type and is, therefore, arranged to send the signal of temperature directly to the control unit 300. In particular, the temperature sensor 30 of electronic type can be a NTC thermistor, i.e. of *Negative Temperature Coefficient* type, or a *Positive Temperature Coefficient* thermistor.

In the alternative embodiment of the invention illustrated in the block scheme of figure 6, instead, temperature sensor 30 is the sensitive element of an electromechanical thermostat 32. In this case, therefore, the signal of temperature detected by the temperature sensor 30 is sent to the control unit 300 through the thermostat 32.

In a foreseen embodiment, the measurement block 70 can be made in a single metallic material having a high thermal conductivity. In this way, an ideal environment is created for detecting the liquid temperature exiting the boiler 20. In fact, unlike the solutions of prior art, which use different materials, in particular between the outlet section of boiler and the point of hydraulic circuit downstream of it where the temperature is detected, the use, in the present invention, of a single material having a high thermal conductivity, allows to avoid the drawback of the prior art solutions of having thermal discontinuity at the contact walls between the different parts made of different materials.

Therefore, the present invention is able to assure a measurement of the liquid temperature that is highly reliable and precise. As a consequence, it is possible also to regulate, very precisely and accurately, the boiler 20.

As shown in the block diagrams of figures 5, 6 and 9, depending on the temperature detected by temperature sensor 30,the control unit 300 is arranged to command an adjusting device 140, in particular comprising at least a pump and a valve that are not shown in figures for reasons of simplicity, per feed more, or less, fuel to boiler 20. For example, the control unit 300 can be configured in such a way to process the temperature data Ti detected by the temperature sensor 30 and to command the pump unit 65 of the adjusting device 140, in order to feed more, or less, fuel to the boiler 20, according to a predetermined function.

The solution provided by the present invention guarantees, therefore, the use of the most suited temperature for the specific application to which water cleaner 1 is intended for.

In particular, as shown in the block scheme of figure 6, an interface member 200, e.g. a touch-screen display, or a keypad, can be provided configured in such a way to allow a user to select a predetermined use among a predetermined plurality of uses that are provided and stored in the memory of water cleaner 100. More in detail, each selected use, e.g. the cleaning of a car body, or the removal of paint from a wall, or the sanitizing of an environment, corresponds to a predetermined threshold temperature, which is, therefore, communicated to the control unit 300.

In particular, the thermal conductivity of the metallic material having a high thermal conductivity, can be higher than, or equal to, 150 W/m·K. In this way, a quick heat transfer is obtained and, therefore, a very accurate detection is carried out.

Preferably, the metallic material in which the measurement block 70 is made of is aluminium, in particular aluminium of high quality. More in detail, the aluminium is able to assure, at the same time, a high thermal conductivity, for example comprises between 200 and 240 W/(m·K), and is very light, ideal properties for the walls 76 of the measurement block 70, within which the temperature detection is carried out by the sensor 30.

As diagrammatically shown in the partially sectioned view of figure 4, between the outlet mouth 24 of the outlet section 22 of boiler 20 and the housing 75, in which the sensor 30 is housed, a substantially constant flow passage section of liquid 50, is provided. In this way, unlike the prior art solutions, abrupt thermal jumps are avoided due to changes in the flow section, in particular narrowings of the ducts that lead the liquid from the boiler 20 to the detection zone of the temperature. In fact, as well known, changes in the flow sections of the ducts cause localized turbulences and, therefore, distortions in the temperature detection by sensor 30.

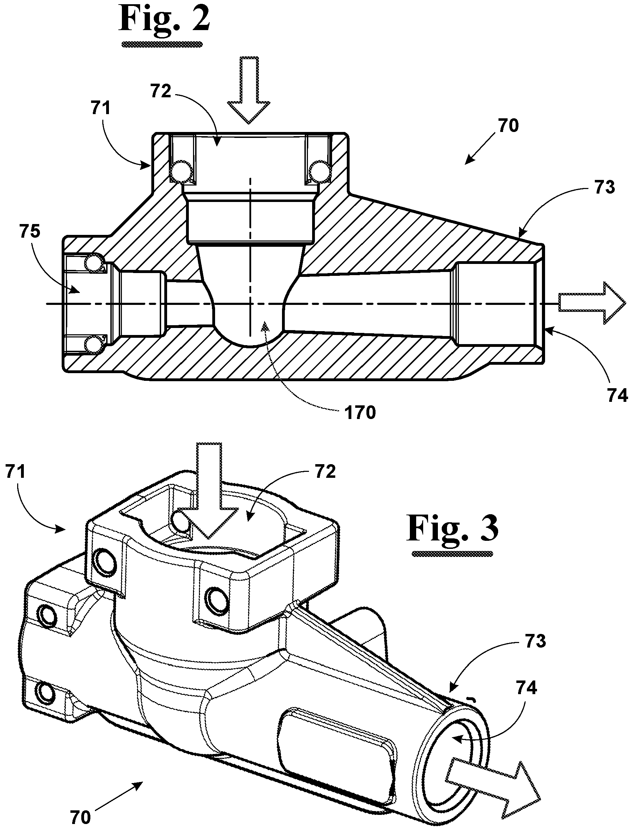

In particular, as diagrammatically shown in the figures 2 and 3, the measurement block 70 has an inlet section 71 having an inlet mouth 72 through which the cleaning liquid flows into it. The measurement block 70 is, furthermore, provided with an outlet section 73 provided with an outlet mouth 74 hydraulically connected to the inlet mouth 72 and from which the cleaning liquid exit the body of the measurement block 70. Between the inlet mouth 72 and the outlet mouth 74 a passageway 170 is defined, through which the cleaning liquid flows through the measurement block 70 (figure 2). As it is diagrammatically shown in figure 4, the section Φ of passageway 170 where the cleaning liquid 50 reaches the temperature sensor 30, has a surface higher than 100 mm², in particular set between 100 mm² and 150 mm². This is possible because of the combination of the fact that the temperature sensor 30 is positioned very close to the outlet mouth 24 of boiler 20, and the section of passageway 170 of the measurement block 70 between the outlet mouth 24 and the detection zone, is substantially constant. The possibility to have a so high contacting surface and to avoid turbulences, almost completely, allows to have a large detection surface, and, therefore, to obtain an extremely accurate temperature detection.

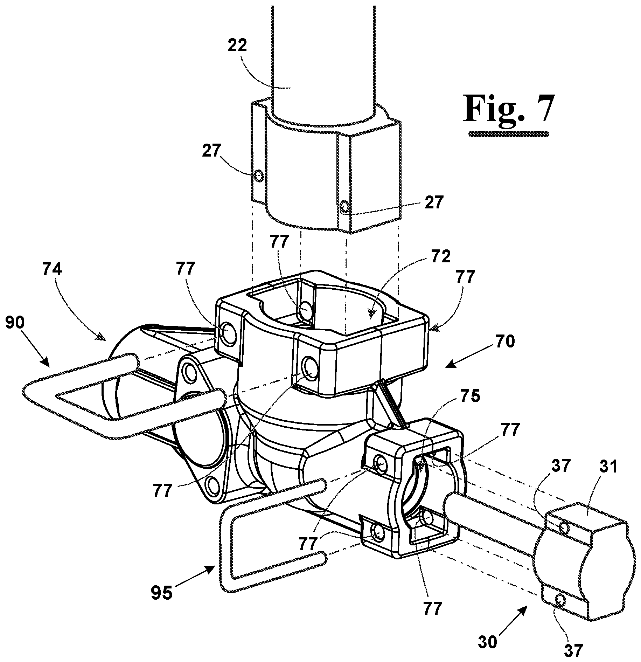

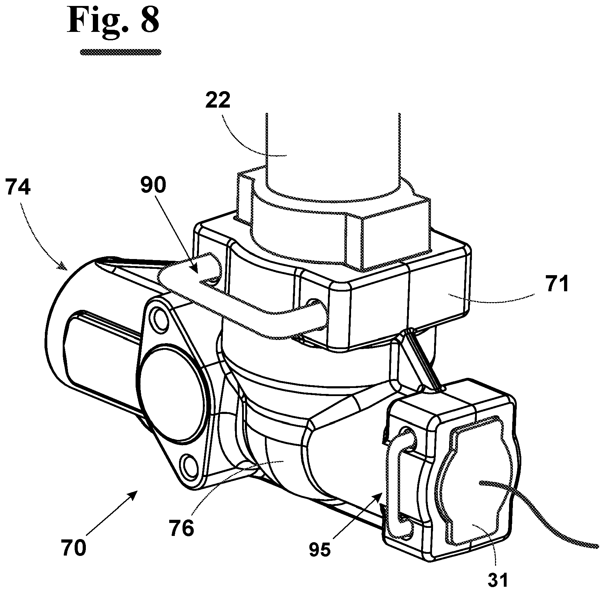

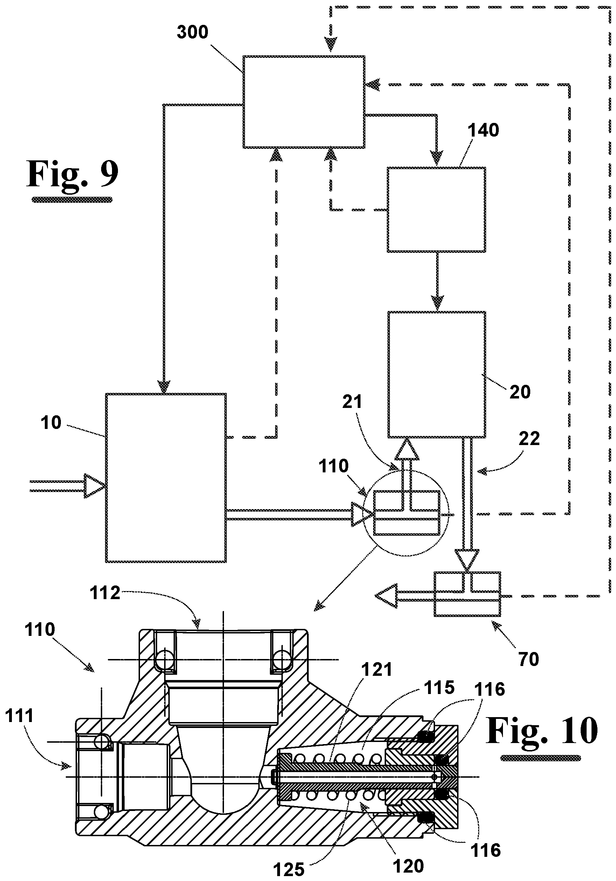

In a possible embodiment of the invention, inlet section 71 of measurement block 70 can be directly connected to the outlet section 22 of boiler 20. In particular, quickly releasable lock and unlock members can be provided arranged to engage in a releasable manner the outlet section 22 of boiler 20 and the inlet section 71 of the measurement block 70. For example, as diagrammatically shown in the figures 7 and 8, the quickly releasable lock and unlock members can comprise at least a locking pin 90, in particular "U" shaped, arranged to engage, in use, in through holes 77 provided at the inlet section 71 and in respective through holes 27 provided at the outlet section 22 of boiler 20. In this way, it is possible to engage, or disengage, in a quick and precise manner, the boiler 20 and the measurement block 70 acting on the quickly releasable lock and unlock members. For example, in the case shown in the figures 8 and 9, at the moment of disassembling the measurement block 70 from the outlet section 22 of boiler 20, will be sufficient to unthread the locking pin 90 from the holes 77 and 27, action that a user can carry out easily and quickly by hand, or using a tool, e.g. a screwdriver.

Analogously to what described above for the engagement between the outlet section 22 of boiler 20 and the inlet section 71 of measurement block 70, also the temperature sensor 30 can be engaged to the measurement block at the housing 75 by means of quickly releasable lock and unlock members.

In particular, again as diagrammatically shown in the figures 7 and 8, the temperature sensor 30 can comprise a enlarged portion 31 arranged to position, in use, at a engagement portion 78 of measurement block 70. The engagement portion 78, at the wall 76 of the measurement block 70, is provided with an aperture 79, for example at the opposite side of the outlet mouth 74. Through the apertures 79, it is possible to introduce, or extract, the temperature sensor 30. More precisely, the enlarged portion 31 of temperature sensor 30 can be provided with holes 37 in which, in use, a second locking pin 95, in particular "U"-shaped, is introduced. This latter, in use, is introduced in the holes 77 of the outlet section 73 of measurement block 70, and in the above disclosed holes 37 of the enlarged portion 31 of temperature sensor 30, in such a way to maintain them in position. At the moment to extract the temperature sensor 30, it is sufficient to remove, also in this case, the locking pin 95 and extract the temperature sensor 30 by hand, or using a tool.

In light of the above, the locking system, which provides the locking pins 90 and 95, allows to easily and quickly disassemble the measurement block 70, for example when ordinary or extraordinary maintenance interventions has to be carried out, without the need of disassemble other parts of the water cleaner.

In a preferred embodiment of the invention, the measurement block 70 is made of one single piece, for example produced by a metal forming process.

More in detail, the measurement block 70 is configured in such a way that the temperature sensor 30 is positioned, in use, at a very short distance d from the outlet mouth 24 of boiler 20. More precisely, the above indicated distance d is less than 20 mm, advantageously less than 10 mm, preferably less than 6 mm. In a preferred embodiment of the invention, the distance d at which the temperature sensor 30 is positioned from the outlet mouth 24 of boiler 20, is set between 4 and 5 mm, i.e. 4≤d≤5.

In particular, the very short distance existing between the outlet mouth 24 of boiler 20 and the sensor 30 and the fact to have a substantially constant flow section between the outlet mouth 24 of boiler 20 and the sensor 30, contribute to avoid to have narrowings, and therefore turbulences, in this portion of hydraulic circuit. The solution above described allows, furthermore, to obtain a high thermal exchange surface. This, together with the other advantages above disclosed, makes sure that, the temperature sensor 30, of which the measurement block 70, according to the invention, is equipped, is able to detect with high precision only the cleaning liquid temperature changes, and that is not affected, instead, by thermal flywheels.

As diagrammatically shown in the block diagram of figure 7, the water cleaner, according to the invention, can be provided with a safety block 110 positioned between the pump unit 10 and the inlet section 21 of boiler 20. More in detail, the safety block 110 is provided with an inlet section 111 through which the high pressure cleaning liquid coming from the pump unit 10 enters the safety block 110 and an outlet section 112 through which the cleaning liquid exits the safety block 110 in order to be fed to boiler 20.

According to the invention, what above described concerning the measurement block 70, in particular that it is made in a single piece of metallic material having a high thermal conductivity, to be produced in a single piece, and the possibility to use quickly releasable lock and unlock members to engage it to the hydraulic circuit 100 and to sensor 30, can be advantageously applied also to the safety block 110.

In particular, the safety block 110 is provided with a pressure relief valve 120 arranged to prevent that the feeding line of the cleaning liquid exiting the pump unit 10 exceed a predetermined threshold pressure. For example, the pressure relief valve 120 can comprise a main body 121, which is housed, in use, within a housing 115, and that can move between a closed position, when the pressure inside the safety block 110 is less than the threshold value, to a discharge position, when the pressure inside the safety block 110 exceeds the above indicated threshold pressure. For example, an elastic member 125 can be provided arranged to elastically oppose the movement of the main body 121 from the closing position to the discharge position. More in detail, the measurement of the elastic member 125 is carried out in such a way that, when the predetermined threshold pressure is exceeded, the elastic member elastically withdraws, thus causing the main body 121 to move in the discharge position. When the pressure inside the safety block 110 decreases, the force exerted by the elastic member 125, which is higher than the pressure exerted by the cleaning liquid, brings the main body 121 back in closing position. In order to guarantee a hermetic sealing and, therefore, to avoid that the cleaning liquid can come out, when the pressure relief valve is in closing position, sealing members 116 are provided (see figure 10).

The particular pressure relief valve 120 is only one possible technical solution that can be used, and analogous solutions can be also used with the same purpose.

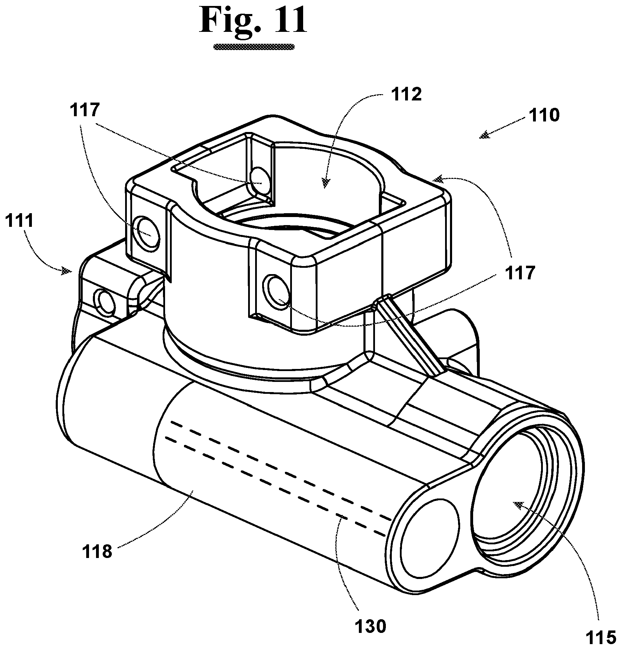

In a further embodiment, the safety block 110 can, furthermore, comprise a temperature sensor 130 housed, in use, within a chamber, for example provided at a side portion 118 of the safety block 110, as shown in figure 11. More in detail, the temperature sensor 130 is arranged to detect the temperature upstream the boiler 20, and to send a signal of temperature to the control unit 300, that, if the cleaning liquid temperature is higher than a predetermined threshold value, commands the pump unit 10 to stop.

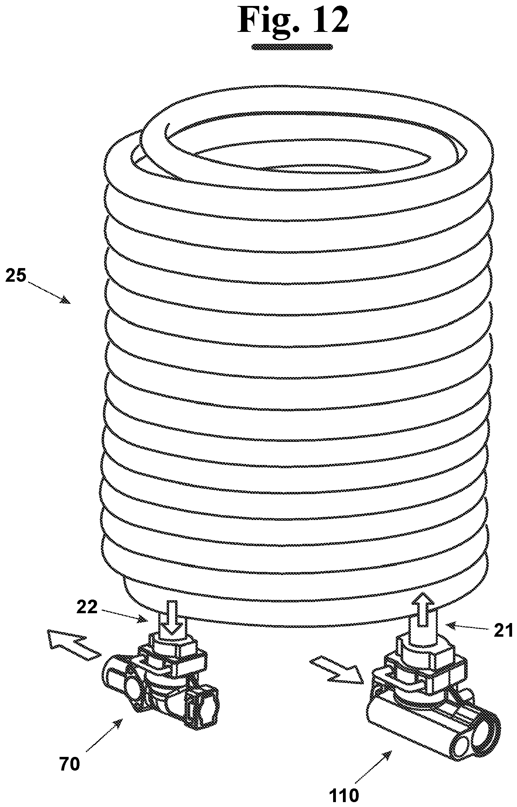

In figure 12 the main components of the hydraulic circuit are diagrammatically shown when both the safety block 110, which is connected to the inlet section 21 of boiler 20, or more precisely to coil 25, through which, in use, the cleaning liquid flows, and the measurement block 70 connected to the outlet section 22 of the coil 25 same.

## Claims

1. A water cleaner (1) comprising:
- a pump unit (10) arranged to feed a determined flow of a cleaning liquid at a predetermined pressure in a hydraulic circuit (100);
- a boiler (20) arranged to supply to said cleaning liquid a predetermined thermal power in order to cause it to heat up to a predetermined temperature, said boiler (20) being provided with an outlet section (22) for said cleaning liquid having a predetermined diameter;
- a delivery device (80) hydraulically connected to said outlet section (22) of said boiler (20) and arranged to deliver said flow of said cleaning liquid at said predetermined pressure and at said predetermined temperature;
wherein said water cleaner provides, furthermore:
- an adjusting unit arranged to adjust said thermal power transferred by said boiler (20) to said cleaning liquid, said adjusting unit comprising:
- a temperature sensor (30), which is arranged to be dipped, in use, in said high pressure cleaning liquid, in such a way to detect its temperature and generate a corresponding signal of temperature Ti;
- a control unit (300) operatively connected to said temperature sensor (30), said control unit (300) comprising a microprocessor and arranged to increase, or decrease, said thermal power transferred by said boiler (20) to said cleaning liquid, in function of said signal of temperature Ti received by said temperature sensor (30);
- a measurement block (70) provided with a housing (75) arranged to house, in use, said temperature sensor (30), said measurement block (70) having an inlet mouth (72) for the inlet of said cleaning liquid, and an outlet mouth (74) for the exit of said cleaning liquid, between said inlet mouth (72) and said outlet mouth (74) a passageway (170), which is hydraulically connected to said housing (75), being defined through which, in use, said cleaning liquid is arranged to flow, said measurement block (70) being made of a single metallic material having a predetermined thermal conductivity, being configured in such a way that said temperature sensor (30) is positioned, in use, at a distance d less than 20 mm from an outlet mouth (24) of said outlet section (22) of said boiler (20), and in such a way that the section Φ of passageway (170) where the cleaning liquid (50) reaches said temperature sensor (30), has a surface higher than 100 mm², in such a way to obtain a highly accurate temperature detection by said temperature sensor (30) immediately downstream of said boiler (20).

2. Water cleaner, according to claim 1, wherein said material, of which said measurement block (70) is made, has a thermal conductivity higher than 150 W/m·K, in particular a thermal conductivity higher than 200 W/m·K, in such a way to provide a quick heat transfer and, therefore, to increase the accuracy of the temperature detection by the temperature sensor.

3. Water cleaner, according to any one of the previous claims, wherein said measurement block (70) is a monobloc, i.e. it is made of one single piece.

4. Water cleaner, according to any one of the previous claims, wherein said measurement block (70) is provided with a constant flow passage section for the liquid (50) between said outlet mouth (24) of said boiler (20) and said housing (75) in which, in use, said temperature sensor (30) is housed.

5. Water cleaner, according to any one of the previous claims, wherein said metallic material is aluminium, or a aluminium alloy.

6. Water cleaner, according to any one of the previous claims, wherein
- said outlet section (22) of said boiler (20) and said inlet section (71) of said measurement block (70);
and/or
- said temperature sensor (30) and said measurement block (70); are engaged by quickly releasable lock and unlock members.

7. Water cleaner, according to claim 6, wherein said quickly releasable lock and unlock members comprise at least a "U"-shaped locking pin (90) arranged to be positioned, in use, in a plurality of holes (77,27) made in said measurement block (70) and in said outlet section (22) of said boiler (20), in particular said quickly releasable lock and unlock members comprising at least a "U"-shaped locking pin (95) arranged to be positioned, in use, in a plurality of holes (77,37) made in said measurement block (70) and in an enlarged portion (31) of said temperature sensor (30).

8. Water cleaner, according to any one of the previous claims, wherein said measurement block (70) is configured in such a way that said temperature sensor (30) is positioned, in use, at a distance d from said outlet mouth (24) of said boiler (20) that is less than 10 mm, advantageously less than 6 mm.

9. Water cleaner, according to any one of the previous claims, wherein said control unit (300) is arranged to adjust the flow of fuel, that is fed to said boiler (20), depending on the signal of temperature t(i) received by the temperature sensor (30).

10. Water cleaner, according to any one of the previous claims, wherein an interface member is, furthermore, provided configured in such a way to allow the selection of a determined application among a predetermined plurality of applications, said selected application corresponding to a predetermined threshold temperature that is communicated to said control unit (300) .

11. Water cleaner, according to any one of the previous claims, wherein a safety block (110) is, furthermore, provided comprising at least a pressure relief valve (120) arranged to move from a closing position, when the pressure inside said safety block (110) is less than a predetermined threshold pressure, to a discharge position, when the pressure inside said safety block (110) exceeds said predetermined threshold pressure, in particular said safety block (110) comprising, furthermore, a temperature sensor (130) arranged to detect the temperature of the high pressure cleaning liquid exiting said pump unit (10), said temperature sensor (130) arranged to send a corresponding signal of temperature to said control unit (300) configured in such a way to command the stop of said pump unit (10) if said detected temperature exceeds a predetermined threshold value.

12. Water cleaner, according to any one of the previous claims, wherein said adjusting unit comprises, furthermore, a feeding device of fuel (140) arranged to feed a determined flow of fuel to said boiler (20), said control unit (300) arranged to command said feeding device (140) in order to increase, or decrease, the flow of fuel that is fed to said boiler (20), in function of the temperature detected by said temperature sensor (30).

13. Water cleaner, according to any one of the previous claims, wherein, a reservoir (40) is provided containing a detergent and descaling agent, said pump unit (10) arranged to suck said detergent and descaling agent from said reservoir (40) and to add it to said cleaning liquid before feeding the resulting mix in said boiler (20).

14. Water cleaner, according to any one of the previous claims, wherein, the flow section of said passageway (170), at which said cleaning liquid reaches said temperature sensor (30), has a surface set between 100 mm² and 150 mm².

15. Method for adjusting the temperature of the cleaning liquid delivered by a water cleaner (1) comprising the steps of:
- pumping a cleaning liquid flow at a predetermined pressure inside a hydraulic circuit (100) of said water cleaner (1);
- heating by a boiler (20) said cleaning liquid at said predetermined pressure up to a predetermined temperature, said boiler (20) provided with an outlet section (22) of said liquid having a predetermined diameter;
- detecting the temperature of the liquid flow exiting said boiler (20) by means of a temperature sensor (30) positioned downstream said boiler (20), said temperature sensor (30) configured in such a way to send a signal of temperature to a control unit (300), said temperature sensor (30) being housed, in use, within a housing (75) provided in a measurement block (70) that is made in a single metallic material, and hydraulically connected to said outlet section (22) of said boiler (20), said measurement block (70) having an inlet mouth (72) for the inlet of said cleaning liquid, and an outlet mouth (74) for the exit of said cleaning liquid, and a passageway (170) being defined between said inlet mouth (72) and said outlet mouth (74) through which, in use, said cleaning liquid flows, said temperature sensor (30) positioned, in use, at a distance from an outlet mouth (24) of said outlet section (22) of said boiler (20) less than 20 mm, and arranged such that the section Φ of passageway (170) where the cleaning liquid (50) reaches said temperature sensor (30) has a surface higher than 100 mm² ;
- adjusting, by said control unit (300), the thermal power provided by said boiler (20) in order to heat said cleaning liquid, at said predetermined pressure, up to said predetermined temperature;
- delivering of said liquid at said predetermined pressure and temperature by a delivery device hydraulically connected to said measurement block (70) .

## Patentansprüche

1. Wasserspender (1), umfassend:
- eine Pumpeneinheit (10), die angeordnet ist, um einen bestimmten Strom einer Reinigungsflüssigkeit bei einem vorgegebenen Druck in einem Hydraulikkreislauf (100) zu liefern;
- einen Boiler (20), der angeordnet ist, um der Reinigungsflüssigkeit eine vorgegebene Wärmeleistung zuzuführen, um zu bewirken, dass sie sich auf eine vorgegebene Temperatur erwärmt, wobei der Boiler (20) mit einem Auslassabschnitt (22) für die Reinigungsflüssigkeit mit einem vorgegebenen Durchmesser versehen ist;
- Liefervorrichtung (80), die hydraulisch mit dem Auslassabschnitt (22) des Boilers (20) verbunden und angeordnet ist, um den Strom der Reinigungsflüssigkeit beim vorgegebenen Druck und bei der vorgegebenen Temperatur zu liefern;
wobei der Wasserspender ferner bereitstellt:
- eine Einstelleinheit, die angeordnet ist, um die vom Boiler (20) zur Reinigungsflüssigkeit übertragene Wärmeleistung einzustellen, wobei die Einstelleinheit umfasst:
- einen Temperatursensor (30), der angeordnet ist, um in Gebrauch in die Hochdruckreinigungsflüssigkeit so getaucht zu werden, um ihre Temperatur zu detektieren und ein entsprechendes Temperatursignal Ti zu generieren;
- eine Steuereinheit (300), die operativ mit dem Temperatursensor (30) verbunden ist, wobei die Steuereinheit (300) einen Mikroprozessor umfasst und angeordnet ist, um die vom Boiler (20) zur Reinigungsflüssigkeit übertragene Wärmeleistung in Abhängigkeit von dem vom Temperatursensor (30) empfangenen Temperatursignal Ti zu erhöhen oder zu senken;
- einen Messblock (70), der mit einem Gehäuse (75) bereitgestellt ist, das angeordnet ist, um in Gebrauch den Temperatursensor (30) aufzunehmen, wobei der Messblock (70) eine Einlassmündung (72) für den Einlass der Reinigungsflüssigkeit und eine Auslassmündung (74) für den Austritt der Reinigungsflüssigkeit aufweist, wobei zwischen der Einlassmündung (72) und der Auslassmündung (74) ein Durchgang (170) definiert ist, der hydraulisch mit dem Gehäuse (75) verbunden ist, durch den in Gebrauch die Reinigungsflüssigkeit angeordnet ist zu strömen, wobei der Messblock (70) aus einem einzigen Metallmaterial mit einer vorgegebenen Wärmeleitfähigkeit hergestellt ist, welches so konfiguriert ist, dass der Temperatursensor (30) in Gebrauch in einem Abstand d von weniger als 20 mm von einer Auslassmündung (24) des Auslassabschnitts (22) des Boilers (20) positioniert ist, und so, dass der Abschnitt φ des Durchgangs (170), wo die Reinigungsflüssigkeit (50) den Temperatursensor (30) erreicht, eine Oberfläche von mehr als 100 mm² aufweist, so dass eine hochgenaue Temperaturdetektion durch den Temperatursensor (30) unmittelbar stromabwärts des Boilers (20) bereitgestellt wird.

2. Wasserspender nach Anspruch 1, wobei das Material, aus dem Messblock (70) hergestellt ist, eine Wärmeleitfähigkeit von mehr als 150 W/m·K, insbesondere eine Wärmeleitfähigkeit von mehr als 200 W/m K aufweist, um einen schnellen Wärmetransfer bereitzustellen und somit die Genauigkeit der Temperaturdetektion durch den Temperatursensor zu erhöhen.

3. Wasserspender nach einem der vorangehenden Ansprüche, wobei der Messblock (70) ein Monoblock ist, d.h. er ist aus einem einzigen Stück hergestellt.

4. Wasserspender nach einem der vorangehenden Ansprüche, wobei der Messblock (70) mit einem konstanten Strömungsdurchgangsabschnitt für die Flüssigkeit (50) zwischen der Auslassmündung (24) des Boilers (20) und dem Gehäuse (75) bereitgestellt ist, in dem in Gebrauch der Temperatursensor (30) aufgenommen ist.

5. Wasserspender nach einem der vorangehenden Ansprüche, wobei das Metallmaterial Aluminium oder eine Aluminiumlegierung ist.

6. Wasserspender nach einem der vorangehenden Ansprüche, wobei:
- der Auslassabschnitt (22) des Boilers (20) und der Einlassabschnitt (71) des Messblocks (70);
und/oder
- der Temperatursensor (30) und der Messblock (70)
durch schnell lösbare Verriegelungs- und Entriegelungselemente in Eingriff genommen sind.

7. Wasserspender nach Anspruch 6, wobei die schnell lösbaren Verriegelungs- und Entriegelungselemente mindestens einen "U"-förmigen Verriegelungsstift (90) umfassen, der angeordnet ist, um in Gebrauch in eine Vielzahl von Löchern (77, 27) positioniert zu werden, die im Messblock (70) und im Auslassabschnitt (22) des Boilers (20) hergestellt sind, wobei die schnell lösbaren Verrieglungs- und Entriegelungselemente insbesondere mindestens einen "U"-förmigen Verriegelungsstift (95) umfassen, der angeordnet ist, um in Gebrauch in eine Vielzahl von Löchern (77, 37) positioniert zu werden, die im Messblock (70) und in einem vergrößerten Abschnitt (31) des Temperatursensors (30) hergestellt sind.

8. Wasserspender nach einem der vorangehenden Ansprüche, wobei der Messblock (70) so konfiguriert ist, dass der Temperatursensor (30) in Gebrauch in einem Abstand d von der Auslassmündung (24) des Boilers (20) positioniert ist, die kleiner als 10 mm, vorteilhafterweise kleiner als 6 mm ist.

9. Wasserspender nach einem der vorangehenden Ansprüche, wobei die Steuereinheit (300) angeordnet ist, um den Brennstoffstrom, der dem Boiler (20) zugeführt wird, in Abhängigkeit vom Temperatursignal t(i), das vom Temperatursensor (30) empfangen wird, einzustellen.

10. Wasserspender nach einem der vorangehenden Ansprüche, wobei ein Schnittstellenelement ferner bereitgestellt und so konfiguriert ist, um die Auswahl einer bestimmten Anwendung unter einer vorgegebenen Vielzahl von Anwendungen zu ermöglichen, wobei die ausgewählte Anwendung einer vorgegebenen Schwellwerttemperatur entspricht, die der Steuereinheit (300) kommuniziert wird.

11. Wasserspender nach einem der vorangehenden Ansprüche, wobei ein Sicherheitsblock (110) ferner bereitgestellt ist, umfassend mindestens ein Druckentlastungsventil (120), das angeordnet ist, um sich von einer Verschlussposition, wenn der Druck im Sicherheitsblock (110) unter einem vorgegebenen Schwellwertdruck liegt, in eine Freigabeposition, wenn der Druck im Sicherheitsblock (110) den Schwellwertdruck übersteigt, zu bewegen, wobei der Sicherheitsblock (110) ferner insbesondere einen Temperatursensor (130) umfasst, der angeordnet ist, um die Temperatur der aus der Pumpeneinheit (10) tretenden Hochdruckreinigungsflüssigkeit zu detektieren, wobei der Temperatursensor (130) angeordnet ist, um ein entsprechendes Temperatursignal an die Steuereinheit (300) zu senden, das so konfiguriert ist, um das Anhalten der Pumpeneinheit (10) zu befehlen, wenn die detektierte Temperatur einen vorgegebenen Schwellwert übersteigt.

12. Wasserspender nach einem der vorangehenden Ansprüche, wobei die Einstelleinheit ferner eine Brennstoffzufuhrvorrichtung (140) umfasst, die angeordnet ist, um einen bestimmten Brennstoffstrom zum Boiler (20) zuzuführen, wobei die Steuereinheit (300) angeordnet ist, um der Zufuhrvorrichtung (140) zu befehlen, den dem Boiler (20) zugeführten Brennstoffstrom in Abhängigkeit von der vom Temperatursensor (30) detektierten Temperatur zu erhöhen oder zu senken.

13. Wasserspender nach einem der vorangehenden Ansprüche, wobei ein Behälter (40) bereitgestellt ist, der ein Reinigungsmittel und ein Entkalkungsmittel enthält, wobei die Pumpeneinheit (10) angeordnet ist, um das Reinigungsmittel und das Entkalkungsmittel aus dem Behälter (40) zu saugen und es zur Reinigungsflüssigkeit hinzuzufügen, bevor die resultierende Mischung in den Boiler (20) zugeführt wird.

14. Wasserspender nach einem der vorangehenden Ansprüche, wobei der Stromabschnitt des Durchgangs (170), an dem die Reinigungsflüssigkeit den Temperatursensor (30) erreicht, eine Oberfläche aufweist, die zwischen 100 mm² und 150 mm² eingestellt ist.

15. Verfahren zum Einstellen der Temperatur der durch einen Wasserspender (1) gelieferten Reinigungsflüssigkeit, umfassend die folgenden Schritte:
- Pumpen eines Reinigungsflüssigkeitsstroms bei einem vorgegebenen Druck in einem Hydraulikkreislauf (100) des Wasserspenders (1);
- Erwärmen der Reinigungsflüssigkeit beim vorgegebenen Druck auf eine vorgegebene Temperatur durch einen Boiler (20), wobei der Boiler (20) mit einem Auslassabschnitt (22) der Reinigungsflüssigkeit mit einem vorgegebenen Durchmesser bereitgestellt ist;
- Detektieren der Temperatur des aus dem Boiler (20) tretenden Flüssigkeitsstroms mithilfe eines Temperatursensors (30), der stromabwärts des Boilers (20) positioniert ist, wobei der Temperatursensor (30) so konfiguriert ist, dass er ein Temperatursignal an eine Steuereinheit (300) sendet, wobei der Temperatursensor (30) in Gebrauch in einem in einem Messblock (70) bereitgestellten Gehäuse (75) aufgenommen ist, das aus einem einzigen Metallmaterial hergestellt ist und hydraulisch mit dem Auslassabschnitt (22) des Boilers (20) verbunden ist, wobei der Messblock (70) eine Einlassmündung (72) für den Einlass der Reinigungsflüssigkeit und eine Auslassmündung (74) für den Auslass der Reinigungsflüssigkeit aufweist, und wobei ein Durchgang (170) zwischen der Einlassmündung (72) und der Auslassmündung (74) bereitgestellt ist, durch den in Gebrauch die Reinigungsflüssigkeit strömt, wobei der Temperatursensor (30) in Gebrauch in einem Abstand von einer Auslassmündung (24) des Auslassabschnitts (22) des Boilers (20) von weniger als 20 mm bereitgestellt und so angeordnet ist, dass der Abschnitt φ des Durchgangs (170), wo die Reinigungsflüssigkeit (50) den Temperatursensor (30) erreicht, eine Oberfläche von mehr als 100 mm² aufweist;
- Einstellen, durch die Steuereinheit (300) der vom Boiler (20) bereitgestellten Wärmeleistung, um die Reinigungsflüssigkeit beim vorgegebenen Druck auf die vorgegebene Temperatur zu erwärmen;
- Liefern der Flüssigkeit beim vorgegebenen Druck und Temperatur durch eine mit dem Messblock (70) hydraulisch verbundene Liefervorrichtung.

## Revendications

1. Appareil de nettoyage à eau (1) comprenant :
- une unité de pompe (10) agencée pour fournir un flux déterminé d'un liquide de nettoyage à une pression prédéfinie dans un circuit hydraulique (100) ;
- une chaudière (20) agencée pour délivrer audit liquide de nettoyage une puissance thermique prédéfinie afin de l'amener à chauffer jusqu'à une température prédéfinie, ladite chaudière (20) étant dotée d'une section de sortie (22) pour ledit liquide de nettoyage possédant un diamètre prédéfini ;
- un dispositif de distribution (80) raccordé hydrauliquement à ladite section de sortie (22) de ladite chaudière (20) et agencé pour distribuer ledit flux dudit liquide de nettoyage à ladite pression prédéfinie et à ladite température prédéfinie ;
ledit appareil de nettoyage à eau fournissant en outre :
- une unité de réglage agencée pour régler ladite puissance thermique transférée par ladite chaudière (20) audit liquide de nettoyage, ladite unité de réglage comprenant :
- un capteur de température (30), qui est agencé pour être plongé, lors de l'utilisation, dans ledit liquide de nettoyage haute pression, d'une façon telle qu'il détecte sa température et à générer un signal correspondant de température Ti ;
- une unité de commande (300) raccordée fonctionnellement audit capteur de température (30), ladite unité de commande (300) comprenant un microprocesseur et étant agencée pour augmenter, ou diminuer, ladite puissance thermique transférée par ladite chaudière (20) audit liquide de nettoyage, en fonction dudit signal de température Ti reçu par ledit capteur de température (30) ;
- un bloc de mesure (70) doté d'un logement (75) agencé pour loger, lors de l'utilisation, ledit capteur de température (30), ledit bloc de mesure (70) possédant une bouche d'entrée (72) pour l'entrée dudit liquide de nettoyage, et une bouche de sortie (74) pour la sortie dudit liquide de nettoyage, entre ladite bouche d'entrée (72) et ladite bouche de sortie (74) un passage (170), qui est raccordé hydrauliquement audit logement (75), étant défini à travers lequel, lors de l'utilisation, ledit liquide de nettoyage est agencé pour s'écouler, ledit bloc de mesure (70) étant constitué d'un seul matériau métallique possédant une conductivité thermique prédéfinie, étant conçu d'une façon telle que ledit capteur de température (30) est positionné, lors de l'utilisation, à une distance d inférieure à 20 mm d'une bouche de sortie (24) de ladite section de sortie (22) de ladite chaudière (20), et d'une façon telle que la section φ du passage (170), où le liquide de nettoyage (50) atteint ledit capteur de température (30), possède une surface supérieure à 100 mm², d'une façon telle qu'une détection de température très précise par ledit capteur de température (30) immédiatement en aval de ladite chaudière (20) est obtenue.

2. Appareil de nettoyage à eau selon la revendication 1, ledit matériau, dont est constitué ledit bloc de mesure (70), possédant une conductivité thermique supérieure à 150 W/m·K, en particulier une conductivité thermique supérieure à 200 W/m•K, d'une façon telle qu'un transfert de chaleur rapide est assuré et, par conséquent, que la précision de la détection de température par le capteur de température est accrue.

3. Appareil de nettoyage à eau, selon l'une quelconquedes revendications précédentes, ledit bloc de mesure (70) étant un monobloc, c'est-à-dire qu'il est constitué d'une seule pièce.

4. Appareil de nettoyage à eau, selon l'une quelconquedes revendications précédentes, ledit bloc de mesure (70) étant doté d'une section de passage à flux constant pour le liquide (50) entre ladite bouche de sortie (24) de ladite chaudière (20) et ledit logement (75) dans lequel, lors de l'utilisation, ledit capteur de température (30) est logé.

5. Appareil de nettoyage à eau, selon l'une quelconquedes revendications précédentes, ledit matériau métallique étant de l'aluminium ou un alliage d'aluminium.

6. Appareil de nettoyage à eau, selon l'une quelconquedes revendications précédentes,
- ladite section de sortie (22) de ladite chaudière (20) et ladite section d'entrée (71) dudit bloc de mesure (70) ;
et/ou
- ledit capteur de température (30) et ledit bloc de mesure (70) ;
étant en prise au moyen d'éléments de verrouillage et de déverrouillage à libération rapide.

7. Appareil de nettoyage à eau, selon la revendication 6, lesdits éléments de verrouillage et de déverrouillage à libération rapide comprenant au moins une goupille de verrouillage en forme de "U" (90) agencée pour être positionnée, lors de l'utilisation, dans une pluralité de trous (77, 27) réalisés dans ledit bloc de mesure (70) et dans ladite section de sortie (22) de ladite chaudière (20), en particulier lesdits éléments de verrouillage et de déverrouillage à libération rapide comprenant au moins une goupille de verrouillage en forme de "U" (95) agencée pour être positionnée, lors de l'utilisation, dans une pluralité de trous (77, 37) réalisés dans ledit bloc de mesure (70) et dans une partie agrandie (31) dudit capteur de température (30).

8. Appareil de nettoyage à eau, selon l'une quelconque des revendications précédentes, ledit bloc de mesure (70) étant conçu d'une façon telle que ledit capteur de température (30) est positionné, lors de l'utilisation, à une distance d de ladite bouche de sortie (24) de ladite chaudière (20) qui est inférieure à 10 mm, avantageusement inférieure à 6 mm.

9. Appareil de nettoyage à eau, selon l'une quelconque des revendications précédentes, ladite unité de commande (300) étant agencée pour régler l'écoulement de combustible, qui est fourni à ladite chaudière (20), en fonction du signal de température t(i) reçu par le capteur de température (30).

10. Appareil de nettoyage d'eau, selon l'une quelconque des revendications précédentes, un élément d'interface étant en outre prévu, conçu d'une façon qu'il permette la sélection d'une application déterminée parmi une pluralité prédéfinie d'applications, ladite application sélectionnée correspondant à une température seuil prédéfinie qui est communiquée à ladite unité de commande (300).

11. Appareil de nettoyage à eau, selon l'une quelconque des revendications précédentes, un bloc de sécurité (110) étant en outre prévu, comprenant au moins une soupape de surpression (120) agencée pour se déplacer à partir d'une position de fermeture, lorsque la pression à l'intérieur dudit bloc de sécurité (110) est inférieure à une pression seuil prédéfinie, vers une position de décharge, lorsque la pression à l'intérieur dudit bloc de sécurité (110) dépasse ladite pression seuil prédéfinie, en particulier ledit bloc de sécurité (110) comprenant, en outre, un capteur de température (130) agencé pour détecter la température du liquide de nettoyage haute pression sortant de ladite unité de pompe (10), ledit capteur de température (130) étant agencé pour envoyer un signal de température correspondant à ladite unité de commande (300) conçue d'un façon telle qu'elle commande l'arrêt de ladite unité de pompe (10) si ladite température détectée dépasse une valeur seuil prédéfinie.

12. Appareil de nettoyage à eau, selon l'une quelconque des revendications précédentes, ladite unité de réglage comprenant, en outre, un dispositif d'alimentation en combustible (140) agencé pour fournir un flux déterminé de combustible vers ladite chaudière (20), ladite unité de commande (300) étant agencée pour commander ledit dispositif d'alimentation (140) afin d'augmenter, ou de diminuer, l'écoulement de combustible qui est fourni à ladite chaudière (20), en fonction de la température détectée par ledit capteur de température (30).

13. Appareil de nettoyage à eau, selon l'une quelconque des revendications précédentes, un réservoir (40) est prévu, contenant un agent de détartrage et détergent, ladite unité de pompe (10) étant agencée pour aspirer ledit agent de détartrage et détergent dudit réservoir (40) et pour l'ajouter audit liquide de nettoyage avant d'introduire le mélange résultant dans ladite chaudière (20).

14. Appareil de nettoyage à eau selon l'une quelconque des revendications précédentes, ladite section de flux dudit passage (170), au niveau de laquelle ledit liquide de nettoyage atteint ledit capteur de température (30), possédant une surface définie entre 100 mm² et 150 mm².

15. Procédé permettant le réglage de la température du liquide de nettoyage distribué par un appareil de nettoyage à eau (1) comprenant les étapes de :
- pompage d'un flux de liquide de nettoyage à une pression prédéfinie à l'intérieur d'un circuit hydraulique (100) dudit appareil de nettoyage à eau (1) ;
- chauffage par une chaudière (20) dudit liquide de nettoyage à ladite pression prédéfinie jusqu'à une température prédéfinie, ladite chaudière (20) étant dotée d'une section de sortie (22) dudit liquide possédant un diamètre prédéfini ;
- détection de la température du flux de liquide sortant de ladite chaudière (20) au moyen d'un capteur de température (30) positionné en aval de ladite chaudière (20), ledit capteur de température (30) étant conçu d'une façon telle qu'il envoi un signal de température à une unité de commande (300), ledit capteur de température (30) étant logé, lors de l'utilisation, dans un logement (75) ménagé dans un bloc de mesure (70) qui est réalisé dans un seul matériau métallique, et raccordé hydrauliquement à ladite section de sortie (22) de ladite chaudière (20), ledit bloc de mesure (70) possédant une bouche d'entrée (72) pour l'entrée dudit liquide de nettoyage, et une bouche de sortie (74) pour la sortie dudit liquide de nettoyage, et un passage (170) étant défini entre ladite bouche d'entrée (72) et ladite bouche de sortie (74) à travers lequel, lors de l'utilisation, ledit liquide de nettoyage s'écoule, ledit capteur de température (30) étant positionné, lors de l'utilisation, à une distance d'une bouche de sortie (24) de ladite section de sortie (22) de ladite chaudière (20) inférieure à 20 mm, et agencé de sorte que la section φ du passage (170) où le liquide de nettoyage (50) atteint ledit capteur de température (30) possède une surface supérieure à 100 mm² ;
- réglage, par ladite unité de commande (300), de la puissance thermique fournie par ladite chaudière (20) afin de chauffer ledit liquide de nettoyage, à ladite pression prédéfinie, jusqu'à ladite température prédéfinie ;
- distribution dudit liquide à ladite pression et température prédéfinies par un dispositif de distribution raccordé hydrauliquement audit bloc de mesure (70).
